# EUROPEAN PATENT APPLICATION

(11) **EP 4 835 751 A1**
(43) Date of publication of application: **04.11.2026**
(21) Application number: 25173760.7
(22) Date of filing: 30.04.2025
(51) Int. Cl.: G06N 10/40

(54) **ATOM TRAP APPARATUS AND METHOD OF PRODUCING AN ATOM TRAP APPARATUS**

(71) Applicant: QUDORA Technologies GmbH, 38126 Braunschweig (DE)
(72) Inventor: Dr. Wahnschaffe, Martina, 38100 Braunschweig (DE); Dr. Zarantonello, Giorgio, 38100 Braunschweig (DE)
(74) Representative: Betten & Resch

(57) **Abstract**

The present disclosure relates to an atom trap apparatus, to a method of producing an atom trap apparatus, and to a method of performing a quantum operation on an atom trapped in an atom trap of an atom trap apparatus. The atom trap apparatus comprises an atom trap comprising an RF trapping potential and a DC trapping potential. The atom trap apparatus comprises a set of RF electrodes, a set of DC electrodes, a manipulation electrode and a ground electrode. The set of RF electrodes is configured to provide the RF trapping potential. The set of DC electrodes is configured to provide the DC trapping potential. The manipulation electrode is configured to provide an oscillating magnetic field. The oscillating magnetic field is configured to perform a gate operation on an atom trapped in the atom trap. The ground electrode is configured to define an electrical ground. The atom trap apparatus comprises at least one structured electrode comprising at least one slit-like recess. The at least one structured electrode comprises a structured ground electrode and/or a structured DC electrode and/or a structured RF electrode.

## Description

### TECHNICAL FIELD

The present disclosure relates to an atom trap apparatus, to a method of producing an atom trap apparatus, and to a method of performing a quantum operation on an atom trapped in an atom trap of an atom trap apparatus. The atom trap apparatus e.g. may be used for quantum computing.

### BACKGROUND

Atom traps are a promising candidate for the realization of quantum computers, and are frequently used for atomic clocks/frequency standards, and as quantum sensors. Atom traps allow to trap, store and manipulate single and multiple charged/neutral particles and to make use of their quantum nature. In a quantum computer, single trapped atoms may be used as individual qubits.

Gate operations on trapped atoms/ions may be performed by means of lasers that address internal states of the trapped atoms/ions. Another option for performing such gate operations is to employ oscillating magnetic fields in the microwave range. This approach e.g. allows to achieve extremely high two-qubit gate fidelities. However, such an approach typically requires a good alignment of the trapping potential and the oscillating magnetic field.

One of the main challenges in atom traps that employ oscillating magnetic fields is to scale up the control of the oscillating magnetic field within the available configurations. The techniques available so far typically require a dependent optimization of the oscillating magnetic field configuration and the trapping potential. The dependent optimization typically requires to accept compromises between the trapping potential and the desired oscillating magnetic field pattern. Furthermore, the dependent optimization may be complex.

### SUMMARY

It is an object of the present disclosure to overcome the aforementioned disadvantages and in particular to provide an atom trap apparatus, which allows to improve the alignment between the oscillating magnetic field and the trapping potential of the atom trap, and which is scalable and able to perform gate operations at high fidelity. It is also an object of the present disclosure to provide a method of producing a corresponding atom trap apparatus and to provide a method of performing a quantum operation on an atom trapped in an atom trap of a corresponding atom trap apparatus.

The above-mentioned objects are addressed by the present invention. The present invention is defined by the independent claims. Dependent claims specify embodiments thereof.

According to a first aspect of the present disclosure, an atom trap apparatus is provided. The atom trap apparatus comprises an atom trap comprising an RF trapping potential and a DC trapping potential. The atom trap apparatus comprises a set of RF electrodes, a set of DC electrodes, a manipulation electrode and a ground electrode. The set of RF electrodes is configured to provide the RF trapping potential. The set of DC electrodes is configured to provide the DC trapping potential. The manipulation electrode is configured to provide an oscillating magnetic field. The oscillating magnetic field is configured to perform a gate operation on an atom trapped in the atom trap. The ground electrode is configured to define an electrical ground. The atom trap apparatus comprises at least one structured electrode comprising at least one slit-like recess. The at least one structured electrode comprises a structured ground electrode and/or a structured DC electrode and/or a structured RF electrode.

Implementations of aspects of the present disclosure allow to achieve a better spatial overlap/a better alignment between the oscillating magnetic field (e.g., minimum/maximum positions thereof) and the RF trapping potential (e.g., a null position of the RF trapping potential, i.e. the RF null). Implementations of aspects of the present disclosure allow to optimize the oscillating magnetic field at the position of an atom trapped in the atom trap further. Implementations of aspects of the present disclosure allow to increase the fidelity of a gate operation performed on a trapped atom.

In the following, the term "RF null" may be used as an abbreviation of "null position of the RF trapping potential".

The structured DC electrode may be comprised in the set of DC electrodes. It may also be provided that the structured DC electrode is not comprised in the set of DC electrodes, e.g. the structured DC electrode may be configured to provide a DC potential that is not (necessarily) part of the DC trapping potential. If the structured DC electrode is not comprised in the set of DC electrodes, it may also be referred to as an "additional DC electrode".

The structured RF electrode may be comprised in the set of RF electrodes. It may also be provided that the structured RF electrode is not comprised in the set of RF electrodes, e.g. the structured RF electrode may be configured to provide an RF potential that is not (necessarily) part of the RF trapping potential. If the structured RF electrode is not comprised in the set of RF electrodes, it may also be referred to as an "additional RF electrode".

The additional RF/DC electrode may allow to manipulate eddy currents that may be generated by the manipulation electrode. E.g., currents may flow in different directions and/or coupling between electrodes may be modified/reduced.

The at least one structured electrode may be a structured ground electrode and/or a structured DC electrode and/or a structured RF electrode.

An extremum position (of the amplitude) of the oscillating magnetic field may be used for performing gate operations. One favorable configuration may be to perform the gate operations at a position of the oscillating magnetic field where the gradient of the oscillating magnetic field is maximal and where the field amplitude of the oscillating magnetic field is minimal/vanishing.

A well-defined alignment between the oscillating magnetic field and the RF trapping potential may be relevant especially for some approaches that e.g. use a minimum/maximum position of the amplitude of the oscillating magnetic field for performing gate operations on a trapped atom, e.g. depending on applications and/or on used field components and/or on the species of trapped atoms. Any displacement/mismatch between the RF trapping potential, e.g. the RF null, and the oscillating magnetic field, e.g. extremum positions (of the amplitude) of the oscillating magnetic field, may decrease the fidelity of the gate operations. Hence, when designing such atom trap apparatuses, typically great care is taken in order to ensure the best possible overlap/alignment between the oscillating magnetic field and the RF trapping potential. In the conventional schemes, this requires a careful design of the RF electrode geometries that takes into account not only optimal RF characteristics but also the properties of the desired oscillating magnetic field. In other words: RF electrodes are conventionally designed partly depending on the desired oscillating magnetic field, which is provided by the manipulation electrode.

The structured electrode allows for an independent adjustment of the oscillating magnetic field. By introducing the at least one structured electrode with the at least one slit-like recess, it is possible to change the oscillating magnetic field configuration without changing other electrodes and without changing the trapping potential. Adjusting only the parameters of the at least one slit-like recess e.g. may allow to provide an overlap of a minimum of the oscillating magnetic field with the position of a trapped atom e.g. without adjusting the trapping electrode design itself. Furthermore, the at least one slit-like recess may allow to provide atom trap apparatuses that have multiple manipulation electrodes/manipulation zones, e.g. along a single microwave feedline, by using the structured electrode(s) to fine tune, when necessary, the properties of the oscillating magnetic field at each manipulation electrode/manipulation zone, which may otherwise differ from manipulation electrode/zone to manipulation electrode/zone without such an adjustment. The additional degrees of freedom may simplify the design of trapped atom quantum processors with integrated oscillating magnetic fields significantly.

When designing an atom trap apparatus, the relevant field geometries are typically simulated first. Typically, the electrodes are then designed in order to ensure the post possible overlap between the trapping potential, e.g. the RF trapping potential, and the oscillating magnetic field. Once the trap is manufactured, the real trap typically exhibits slightly different properties as compared to the simulated properties, e.g. due simulation and/or manufacturing inaccuracies. Trap properties and deviations from the simulated values may be measured, and a new trap may be designed, e.g. with design parameters that are adjusted depending on the measured trap properties. According to the present disclosure, the design parameters of the new trap may be adjusted, e.g. by implementing/varying the at least one slit-like recess.

For conventional traps, displacements between the oscillating magnetic field and the RF trapping potential due to fabrication inaccuracies may be around 2 µm, e.g. if the trap is designed for minimal displacement. The displacement "by design" could also be e.g. on the order of around 7 µm, e.g. if an otherwise ideal trap geometry with e.g. favorable properties of the manipulation electrode and/or the RF electrode is simulated, and e.g. if the design is not particularly optimized for optimal overlap between the oscillating magnetic field and the RF trapping potential but for optimal properties of the oscillating magnetic field/of the RF trapping potential. A trap with a large displacement on the order of 7 µm may be not usable for gate operations due to this large displacement. According to the present disclosure, however, the at least one slit-like recess may allow to maintain the favorable/optimal properties of the oscillating magnetic field/of the RF trapping potential while reducing the displacement e.g. from around 7 µm to e.g. 0 µm. In the conventional methods, it was not possible to keep the favorable/optimal properties of the oscillating magnetic field/of the RF trapping potential and to achieve an optimal overlap. Instead, in the conventional methods, sacrificing the favorable/optimal properties of the oscillating magnetic field/of the RF trapping potential was the only way for achieving an optimal overlap.

In some cases, using the conventional design methods, it was impossible to design a perfect overlap between the oscillating magnetic field and the RF trapping potential.

It is generally possible to somehow correct a displacement between the oscillating magnetic field and the RF trapping potential by adding DC offset potentials. However, these DC offset potentials tend to induce micromotion and heating of trapped atoms, which may ultimately cause decoherence and loss of atoms from the atom trap, such that the atoms are no longer trapped. Hence, it is generally very difficult, if not impossible, to correct displacements on the order of 2 µm or more by using additional DC offset potentials.

Hence, in the conventional schemes used so far, instead of using an RF-wise optimal geometry of the set RF electrodes, their geometry has to be modified in order to achieve the best possible overlap between the oscillating magnetic field and the RF trapping potential. The present disclosure allows to keep the RF electrodes unchanged but to instead introduce the structured electrode(s) (which may be an RF electrode(s) and/or a DC electrode(s) and/or a ground electrode). Thereby, the present disclosure provides a huge advantage. It becomes possible to firstly design the atom trap with optimal (RF) properties without specifically considering the manipulation electrode/the oscillating magnetic field. The manipulation electrode/the oscillating magnetic field may then be considered in a second design step by adding/modifying the at least one slit-like recesses, and displacements can be corrected/avoided/reduced thereby.

In the present disclosure, the manipulation electrode may provide a main field pattern for manipulation of an atom trapped in the atom trap, e.g. for performing quantum gate operations on the atom. The slit-like recess may add a constant field that pushes the main field of the manipulation electrode in different directions. The slit-like recess may direct/manipulate, in a controlled way, the currents induced into the structured electrode close to the manipulation electrode and/or close to a conductor connected to the manipulation electrode. The slit-like recess may allow to manipulate the oscillating magnetic field in many different ways. E.g., it may be possible to increase/decrease the oscillating magnetic field. Whether the field is increased or decreased generally depends on the phase difference between the main field pattern and the field pattern resulting from the currents induced in the structured electrode. E.g., it may be possible to increase/decrease the oscillating magnetic field of the main field pattern resulting from a change in the currents in the manipulation electrode due to the coupling with the structured electrode/the slit-like recess.

The manipulation electrode may comprise a plurality of surfaces that each may have a direct line of sight to an atom trapped in the atom trap. These surfaces may be connected with each other, e.g. in a lower layer of the atom trap apparatus. It may be provided that the manipulation electrode does not comprise a surface that has a direct line of sight to an atom trapped in the atom trap. E.g., the manipulation electrode may be buried.

The atom trap apparatus may comprise a plurality of manipulation electrodes that e.g. may be configured to jointly provide the oscillating magnetic field. The atom trap apparatus may comprise a plurality of manipulation electrodes that e.g. may be configured to provide a plurality of oscillating magnetic fields, e.g. at different locations of the atom trap apparatus, e.g. for different atom traps. The location of an oscillating magnetic may be considered as a manipulation zone. The number of manipulation zones may be different as compared to the number of manipulation electrodes. E.g., one manipulation electrode may provide a plurality of oscillating magnetic fields at different locations/a plurality of manipulation zones. The number of manipulation zones may be larger or smaller as compared to the number of manipulation electrodes, or may be identical (e.g., each manipulation electrode may provide a corresponding manipulation zone). Features disclosed with respect to one manipulation electrode may also apply to one or more/each of a plurality of manipulation electrodes, unless specified otherwise and unless otherwise contradictory.

The gate operation may be performed using e.g. a pi-transition or a sigma-transition. The oscillating magnetic field pattern is not particularly limited, and various patterns may be used. The internal transition of an atom used for the gate operation may be e.g. a hyperfine transition, a Zeeman-transition, a fine-structure transition, e.g. any type of magnetic dipole and/or higher-order transitions.

The term "structured electrode" may indicate that the electrode is structured by the presence of the at least one slit-like recess.

The present disclosure provides additional degrees of freedom that may significantly simplify the design of atom trap apparatuses comprising a manipulation electrode for providing an oscillating magnetic field.

The present disclosure may allow to realize a better/optimal RF design of the set of RF electrodes. It may be provided that no adaptation of the RF electrodes to the manipulation electrode is required any more. The need for adaptation may be at least significantly reduced. In the conventional schemes, the design of the set of RF electrodes typically depends heavily on the properties of the desired oscillating magnetic field.

Employing slit-like recesses may have the additional benefit that slit-like recesses, having widths of e.g. 1 µm or less, 2 µm or less, 5 µm or less, 10 µm or less, 20 µm or less, 50 µm or less, or 100 µm or less, may be easy to fabricate and easy to tune. Non-slit-like recesses having large widths, e.g. 100s of microns or e.g. already above 10 micron (e.g., depending on the fabrication method), may e.g. lead to a transfer of height profile from lower layers into layers above.

The dimensions, quantity and location of the at least one slit-like recess may be determined e.g. based on numerical simulations and e.g. considering the properties of the set of RF electrodes/the RF trapping potential and the properties of the manipulation electrode/the oscillating magnetic field.

The at least one structured electrode may comprise a plurality of slit-like recesses. Features disclosed with respect to one slit-like recesses may also apply to one or more/each of a plurality of slit-like recesses, unless specified otherwise and unless otherwise contradictory.

The atom trap apparatus may comprise a plurality of structured electrodes, each of which may comprise at least one/one/a plurality of slit-like recesses. Features disclosed with respect to one structured electrode may also apply to one or more/each of a plurality of structured electrodes, unless specified otherwise and unless otherwise contradictory.

The at least one slit-like recess may have an aspect ratio of more than 1, or more than 2, or more than 5, or more than 10, or more than 20, or more than 50, or more than 100, or more than 200, or more than 500, or more than 1000.

The at least one slit-like recess may have a length of e.g. 20 µm or more, or 50 µm or more, or 100 µm or more, or 200 µm or more, or 500 µm or more, or 1 mm or more, or 2 mm or more.

The at least one slit-like recess may be non-parallel to the manipulation electrode/a straight (main) portion thereof. E.g., the at least one slit-like recess may have an angle with the manipulation electrode/a straight (main) portion thereof that may be between 10° to 170°, or between 30° and 150°, or between 45° and 135°. The at least one slit-like recess may be orthogonal to the manipulation electrode/a straight (main) portion thereof.

The at least one slit-like recess may be parallel to the manipulation electrode/a straight (main) portion thereof. The at least one slit-like recess may have an angle with the manipulation electrode/a straight (main) portion thereof that may be between -80° to 80°, or between -45° to 45°, or between -30° and 30.

One slit-like recess of the at least one slit-like recess may be parallel to the manipulation electrode/a straight (main) portion thereof and another slit-like recess of the at least one slit-like recess may be orthogonal to the manipulation electrode/a straight (main) portion thereof.

The at least one slit-like recess may have an angle with the manipulation electrode/a straight (main) portion thereof that e.g. may be between 0° to 180°.

The at least one structured electrode may comprise a material inside the at least one slit-like recess, e.g. polyimide. The at least one-slit-like recess may be void. It may be provided that no electrically conductive material is present in the at least one slit-like recess. It may be provided that the at least one slit-like recess does not contain/comprise an electrically conductive material. It may be provided that the at least one slit-like recess forms an area where no electrically conductive material is present.

It may be provided that the slit-like recess does not divide the structured electrode into separate pieces of material/separate electrodes.

The at least one slit-like recess may have a rectangular shape, e.g. in a top view/a cross-sectional top view. The at least one slit-like recess may also have a shape other than a rectangular shape.

At least one/some/all of the slit-like recesses may comprise points inside the slit-like recess that cannot be connected to the manipulation electrode and/or to a microwave line connected to the manipulation electrode by a straight line that does not pass through any conductive material (e.g., apart from the conductive material of the microwave line and/or of the manipulation electrode), e.g. in a top-view/a cross-sectional top view. E.g., it may be provided that 25% or more, or 50% or more, or 75% or more, or 90% or more of the points located within at least one/some/all of the slit-like recesses cannot be connected to the manipulation electrode and/or to the microwave line by such a straight line. It may also be provided that at least one of the slit-like recesses comprises points that can be connected to the manipulation electrode and/or to the microwave line by such a straight line while at least another one of the slit-like recess comprises points that can be connected to the manipulation electrode and/or to the microwave line by such a straight line.

At least one of the slit-like recesses and/or all of the slit-like recesses may comprise points inside the slit-like recess whose shortest line of connection to the manipulation electrode and/or to the microwave line passes through a conductive material that is not comprised in the manipulation electrode or the microwave line, e.g. in a top-view/a cross-sectional top view. E.g., it may be provided that 25% or more, or 50% or more, or 75% or more, or 90% or more of the points located within at least one/some/all of the slit-like recesses have such a shortest line of connection.

At least one/some/all of the slit-like recesses may comprise points (e.g. 25% or more, 50% or more, 75% or more, or 90% or more) inside the slit-like recess that have a shortest distance to the manipulation electrode and/or to a microwave line connected to the manipulation electrode of 20 µm or more, or 50 µm or more, or 100 µm or more, or 200 µm or more, or 500 µm or more, or 1 mm or more, or 2 mm or more., e.g. in a top view/a cross-sectional top view.

The manipulation electrode may be configured to provide the oscillating magnetic field when corresponding currents are applied to the manipulation electrode. The oscillating magnetic field may be configured to perform and/or to be used in a quantum gate operation on an atom trapped in the atom trap. Optionally, the manipulation electrode may be configured to generate an oscillating magnetic near-field in the atom trap, the oscillating magnetic near-field comprising a gradient. The oscillating magnetic field may be a microwave oscillating magnetic field.

The set of RF electrodes may be configured to provide the RF trapping potential when corresponding RF voltages are applied to the set of RF electrodes. The set of DC electrodes may be configured to provide the DC trapping potential when corresponding DC voltages are applied to the set of DC electrodes. It may be provided that only voltages and no currents are applied to the set of RF/DC electrodes.

Having a structured ground electrode may be advantageous in terms of adjusting the oscillating magnetic field as compared to having a structured DC electrode, which may be advantageous as compared to having a structured RF electrode. E.g., it may be considered that a ground electrode has a less complex function as compared to a DC/RF electrode. However, these differences in level of advantageousness may also be (e.g. partly) compensated by the parameters of the at least one slit-like recess, and e.g. may be ultimately determined on a case-by-case analysis.

The ground electrode of the atom trap apparatus may have additional effects and functions. The ground electrode may generally define an electrical ground for the electrical components of the atom trap apparatus. The presence of the ground electrode may also introduce inductive, capacitive and/or resistive coupling from other electrodes of the atom trap apparatus (e.g., DC electrodes, RF electrodes and manipulation electrodes), which may change the electrical behavior of these electrodes, e.g. the electrical response of these electrodes to a driving signal. The presence of the ground electrode may also change the electric field behavior, since electric field lines go towards the electric ground. If the ground electrode would be absent, then the field lines may move differently towards the then closest ground element. The ground electrode may reduce direct coupling between two separate electrodes. E.g., if the ground electrode is present between an RF electrode and a manipulation electrode, the ground electrode may reduce the direct coupling between those electrodes by acting as a wall, which is especially relevant for atom trap apparatuses with multiple manipulation electrodes.

The atom trap apparatus may also comprise a plurality of ground electrodes, each of which may be configured to define an/the electrical ground. The ground electrodes of the plurality of ground electrodes may be electrically connected with each other and e.g. may define one common ground. The ground electrodes of the plurality of ground electrodes may be biased at different DC voltages and e.g. may define different grounds. The plurality of ground electrodes may be used to define specific current flows and/or to restrict ground coupling to specific ground electrodes. Features disclosed with respect to one ground electrode may also apply to one or more/each of a plurality of ground electrodes, unless specified otherwise and unless otherwise contradictory.

The atom trap apparatus may comprise a single atom trap or a plurality of atom traps. Features disclosed with respect to a single atom trap may also apply to one or more/each of a plurality of atom traps, unless specified otherwise and unless otherwise contradictory.

The atom trap apparatus may be used for quantum computing. E.g., the present atom trap apparatus may be/may be comprised in a quantum computer.

The atom trap apparatus may be used for an (atomic) clock/for a frequency standard. E.g., the present atom trap apparatus may be/may be comprised in an (atomic) clock/a frequency standard.

The atom trap apparatus may be used for quantum sensing. E.g., the present atom trap apparatus may be/may be comprised in a quantum sensing apparatus/a quantum sensor.

The atom trap may be a trap configured to trap neutral atoms/particles. The atom trap may be an ion trap, i.e. a trap configured to trap charged atoms/charged particles. The present description is generally applicable to all kinds of atom traps, including traps for neutral atoms and traps for charged particles/ion traps, unless specified otherwise and unless otherwise contradictory.

The atom trap may be configured to trap one or more atoms/ions therein. Each atom/ion may be an individual qubit of a quantum computer. Alternatively, an individual qubit of a quantum computer may be formed by a plurality of atoms/ions trapped in the atom/ion trap, or in a plurality of atom/ion traps.

Herein, the term "atom trap" is used, which may refer to ion traps. Herein, the term "atom" is used, which e.g. may refer to neutral atoms and/or to charged atoms, i.e. ions. The term "atom" may also refer to neutral/charged particles in general and may e.g. also cover electrons. The term "ion" may also refer to electrons or other charged particles.

The atom trap/the atom trap apparatus may be configured to trap and/or to manipulate an atom in the atom trap. An ion trapped in the atom/ion trap e.g. may be one of the following species: Ba⁺, Be⁺, Ca⁺, Mg⁺, Sr⁺, Yb⁺. The atom trap may also be configured to trap atoms of a plurality of species, e.g. double species. E.g., the ion trap apparatus may be configured to perform (sympathetic) cooling via atoms (neutral atoms/ions) of one species, and computation via atoms (neutral atoms/ions) of another species.

The atom trap/the atom trap apparatus may be configured to trap (cold) neutral atoms and ions, e.g. the atom trap may be a hybrid trap. This may allow for a higher versality of the atom trap apparatus.

The atom trap/the atom trap apparatus may be configured to trap atomic particles and/or molecular particles e.g. single particles and/or plurality of particles, e.g. single, doubly or highly ionized particles.

The atom trap may be any type of atom trap. E.g., the atom trap may be a Paul trap, which sometimes is also referred to as "RF trap" and/or as "Quadrupole ion trap". A Paul trap comprises a set of RF electrodes, configured to provide an RF trapping potential, and a set of DC electrodes, configured to provide a DC trapping potential. The trapping potential of the Paul trap comprises the RF trapping potential and the DC trapping potential. The atom trap may also be a (planar) Penning trap and/or a combination of a Paul trap and a Penning trap.

The atom trap may also be a magneto-optical trap or an atom chip trap.

The atom trap apparatus may comprise a plurality of atom traps, e.g. atom traps that have different functions such as detection, cooling, storage and/or performing quantum gates. The atom trap apparatus may comprise one or more atom traps for each respective function, e.g. one or more detection traps, one or more cooling traps, one or more storage traps, and/or one or more manipulation/computation/gate traps. A detection trap may be configured to readout an internal state of an atom trapped in the detection trap. A cooling trap may be configured to cool an atom trapped in the cooling trap. A storage trap may be configured to store one or more atoms, e.g. when they are not required for computations. A manipulation trap may be configured to perform quantum gates on a single atom and/or on multiple atoms trapped in the manipulation trap. The atom trap apparatus may be configured to shuttle atoms between individual atom traps of the plurality of atom traps.

Having a plurality of atom traps that are different from each other may allow to perform dedicated functions in dedicated traps. This may increase the variability of the atom trap apparatus. Further, dedicated atom traps may perform their respective functions with a higher fidelity and/or less decoherence. Further, having a plurality of atom traps may facilitate scalability of the atom trap apparatus.

The RF trapping potential e.g. may have a frequency of 1 MHz or more. The RF trapping potential e.g. may have a frequency of 200 MHz or less. An RF signal of one electrode of the RF electrode set e.g. may have a frequency of 1 MHz or more. An RF signal of one electrode of the RF electrode set e.g. may have a frequency of 200 MHz or less.

The oscillating magnetic field may have a frequency of 500 MHz or more. The oscillating magnetic field may have a frequency of 50 GHz or less. A driving signal of the manipulation electrode may have a frequency of 500 MHz or more. A driving signal of the manipulation electrode may have a frequency of 50 GHz or less.

The oscillating magnetic field may have a frequency of 1 MHz or more. The oscillating magnetic field may have a frequency of 50 GHz or less. A driving signal of the manipulation electrode may have a frequency of 1 MHz or more. A driving signal of the manipulation electrode may have a frequency of 50 GHz or less. A driving signal of the manipulation electrode may be a microwave signal.

The frequency of the oscillating magnetic field may depend on the species of the trapped atom/ion.

The atom trap apparatus may comprise coils and/or permanent magnets configured to provide static magnetic fields, e.g. for trapping and/or manipulation on trapped atoms/ions, e.g. for performing gate operations.

An atom trapped in the atom trap may be assumed to be located at the minimum of the total potential/pseudopotential of the atom trap. The (usual) position of an atom trapped in the atom trap/the minimum of the total potential/pseudopotential may also be referred to as the center of the trap. The terms "trapped atom" and "atom trapped in the atom trap" may be used interchangeably/in the same context/with the same meaning, unless specified otherwise and unless otherwise contradictory.

The term "atom trap" and "trapping potential of an atom trap" may be used interchangeably/in the same context/with the same meaning, unless specified otherwise and unless otherwise contradictory. In particular, the term "atom trap" may be used as an abbreviation of the term "trapping potential of the atom trap".

Surfaces of the atom trap apparatus that have a direct line of sight to an atom trapped in the atom trap/a position of an atom when trapped in the atom trap may be respectively coated with a conductive layer, e.g. a metal layer, to avoid built-up of parasitic charges and to avoid uncontrolled e-fields from built-up charges on substrate surfaces.

The RF electrodes and/or the DC electrodes and/or the manipulation electrodes may be multilayer electrodes. One or more of the multilayer electrodes may comprise at least one dielectric layer in between electrode layers of the respective multilayer electrode.

The RF electrodes and/or the DC electrodes and/or the manipulation electrodes may also be single-layer electrodes. It is also possible to use multilayer geometries for some of the electrodes and single-layer geometries for other ones of the electrodes.

The dielectric layer(s) between electrode layers of respective multilayer electrode may comprise at least one of the following materials: Polyimide, SiO₂, SiN, TEOS (Tetraethyl orthosilicate).

The atom trap may be a surface trap, e.g. a 2D Paul trap. The atom trap may also be a 3D trap, where e.g. electrodes of the set of DC electrodes and electrodes of the set of RF electrodes are located on two different substrates facing towards each other, and where the atom trap is located between the two substrates. Such 3D traps may have the advantage that higher trap depths can be achieved as compared to 2D traps. The atom trap apparatus may comprise a plurality of 3D atom traps that e.g. may be located above each other.

The at least one slit-like recess may be configured to modify the oscillating magnetic field as compared to a state where the at least one slit-like recess is not present in the structured electrode. The at least one slit-like recess may be configured to shift the oscillating magnetic field, e.g. to a position where different field components balance in a desirable way. An extremum position (e.g. of the amplitude) of the oscillating magnetic field may be shifted towards a null position of the RF trapping potential.

A null/maximum/minimum/extremum position of the oscillating magnetic field may be shifted towards a null position of the RF trapping potential, e.g. of the amplitude of the oscillating magnetic field. A null/maximum/minimum/extremum position of the oscillating magnetic field may be shifted towards a null position of the RF trapping potential, e.g. of a (first/second/third/any order) derivative of the amplitude of the oscillating magnetic field. A null/maximum/minimum/extremum position of the oscillating magnetic field may be shifted towards a null position of the RF trapping potential, e.g. of a combination/sum of (first/second/third/any order) derivatives of the amplitude of the oscillating magnetic field.

The at least one slit-like recess may be configured to shift the oscillating magnetic field, e.g. a position of the oscillating magnetic field where the AC Zeeman shift for a (qubit) transition of an atom trapped in the atom trap is zero, towards a null position of the RF trapping potential.

The modification of the oscillating magnetic field may relate to the oscillating magnetic field as provided by the manipulation electrode when a predetermined current is applied to the manipulation electrode.

An extremum position (e.g. of the amplitude) of the oscillating magnetic field may be shifted e.g. by 0,5 µm or more, by 1 µm or more, by 2 µm or more, by 5 µm or more, or 10 µm or more, or 20 µm or more, or 50 µm or more, or 100 µm or more, or 150 µm or more, or 200 µm or more. The amount of the desired shift depends on the specific trap geometry and may also be a function of the trapping distance, i.e. the distance between the trapped atom and the nearest electrode. A typical trapping distance e.g. may be 70 µm. An extremum position (e.g. of the amplitude) of the oscillating magnetic field may be shifted by a factor of 1 % of the trapping distance or more, by a factor of 2 % of the trapping distance or more, by a factor of 5 % of the trapping distance or more, by a factor of 10 % of the trapping distance or more, or by a factor of 20 % of the trapping distance or more, or by a factor of 50 % of the trapping distance or more, or by a factor of 100 % of the trapping distance or more, or by a factor of 200 % of the trapping distance or more.

An extremum position (e.g., minimum/maximum position) of the oscillating magnetic field (amplitude) and the RF null position may overlap. A distance between an extremum position (e.g., minimum/maximum position) of the oscillating magnetic field (amplitude) and the RF null position may be less than 2 µm, or less than 1 µm, or less than 0.5 µm, or less than 0.1 µm.

The at least one slit-like recess may be configured to modify the amplitude of the oscillating magnetic field at a null position of the RF trapping potential, e.g. as compared to a state where the at least one slit-like recess is not present in the structured electrode. The at least one slit-like recess may be configured to keep a gradient of the oscillating magnetic field unchanged at the null position of the RF trapping potential.

The amplitude of the oscillating magnetic field at the RF null may be modified, i.e. reduced/increased, e.g. by a factor of 0,1 or more, of 0,5 or more, of 1 or more, of 2 or more, of 5 or more, of 10 or more, or 100 or more, or 500 or more, or 1000 or more, or 5000 or more, or 10000 or more.

The absolute value of the amplitude of the oscillating magnetic field at the RF null e.g. may be below 1 mT, or below 100 µT, or below 10 µT, or below 1 µT, or below 0.5 µT, or below 0.1 µT, or below 50 nT. The absolute value may ultimately depend on amount of the current provided to the manipulation electrode.

It may be provided that a gradient of the oscillating magnetic field at the RF null changes only e.g. by 20 % or less, or 10 % or less, or 5 % or less, or 1 % or less, due to the at least one slit-like recess. Within a tolerance of e.g. 20 % or less, or 10 % or less, or 5 % or less, or 1 % or less, the gradient may be kept unchanged by the at least one slit-like recess. It may be provided that a gradient of the oscillating magnetic field at the RF null may be kept unchanged by the at least one slit-like recess.

The oscillating magnetic field may have a maximum gradient at a minimal field amplitude, which may be particularly advantageous for certain schemes of performing gate operations. In addition, the maximum gradient of the oscillating magnetic field may be located at the RF null, or very close thereto (e.g., a distance may be less than 2 µm, or less than 1 µm, or less than 0.5 µm, or less than 0.1 µm). The oscillating magnetic field may have maximal gradient at one or more positions where a frequency shift of a (qubit) transition of an atom trapped in the atom trap is minimal. In addition, a minimal frequency shift position of the oscillating magnetic field may be located at the RF null, or very close thereto (e.g., a distance may be less than 2 µm, or less than 1 µm, or less than 0.5 µm, or less than 0.1 µm).

The at least one structured electrode may comprise a plurality of slit-like recesses. Slit-like recesses of the plurality of slit-like recesses may be connected to each other, e.g. all slit-like recesses of the plurality of slit-like recesses. Slit-like recesses of the plurality of slit-like recesses may form e.g. at least one of the following structures: a fork-like structure, a plurality of parallel slits, a fan-like structure, a spiral, a circle, a serpentine-like structure, a meander structure.

Parameters of these structures, e.g. distances between slit-like recesses, angles between slit-like recesses, widths of slit-like recesses, lengths of slit-like recesses, aspect ratio of slit-like recesses, orientations, distances in a lateral direction from the manipulation electrode (or its feedline) may be optimized based on the desired impact on the oscillating magnetic field by employing numerical simulations.

The manipulation electrode may be one of the following: a single-wire like electrode, a two-wire like electrode, a single waveguide-like electrode, a coplanar waveguide-like electrode, a meander-shaped electrode, a trident-like electrode, a U-shaped electrode, a spiral-like electrode.

E.g., a meander-shaped electrode is described in Carsjens et. al., "Surface-electrode Paul trap with optimized near-field microwave control", Appl. Phys. B 114, 243 (2014), doi: 10.1007/s00340-013-5689-6.

The oscillating magnetic field may be e.g. a quadrupole field or a single-wire field or a two-wire field or a field generated by a spiral-like manipulation electrode.

If the manipulation electrode is a single waveguide-like electrode, it may comprise a single-wire like area that may have a direct line-of-sight to a trapped atom (but the direct line-of-sight may be not necessary, the area/the manipulation electrode may also be buried).

Having the manipulation electrode as a single waveguide-like electrode may have the advantage that an oscillating magnetic field with a simple field pattern may be provided. However, eddy currents typically shift the position of the oscillating magnetic field, where field lines are parallel to a surface of the manipulation electrode, i.e. the maximum position of the amplitude of the oscillating magnetic field, away from the RF null. The present disclosure may allow to compensate these eddy currents due to the at least one slit-like recess such that the maximum position of the amplitude of the oscillating magnetic field is not shifted away from the RF null. The present disclosure may also allow to manipulate the maximum of the amplitude of the oscillating magnetic field, e.g. to intentionally increase it.

If the manipulation electrode is a coplanar waveguide-like electrode, it may comprise two separate areas and may be configured to support specific modes of travelling waves. The manipulation electrode may then be configured to have currents, e.g. microwave currents, in both areas and flowing in opposite directions. Also here, eddy currents typically shift an extremum position (e.g. of the amplitude) of the oscillating magnetic field (e.g., minimum position) away from the RF null. The present disclosure may allow to compensate these eddy currents due to the at least one slit-like recess such that the extremum/minimum position (e.g. of the amplitude) of the oscillating magnetic field is not shifted away from the RF null. The present disclosure may also allow to manipulate the extremum/minimum (e.g. of the amplitude) of the oscillating magnetic field, e.g. to intentionally decrease it.

The set of RF electrodes may have (e.g. at least) one axial symmetry axis, e.g. in a top view/a cross-sectional top view.

The set of RF electrodes may have two (or more) axial symmetry axes, e.g. in a top view/a cross-sectional top view. The two axial symmetry axes may be orthogonal.

The present disclosure may allow to replace sets of complicated asymmetric RF electrodes with sets of symmetric RF electrodes that may have a simpler design (e.g. having one/two orthogonal symmetry axes). With the present disclosure, it may at the same time be possible to achieve optimal/preferred RF electrode properties with sets of symmetric RF electrodes that so far could only be achieved with sets of asymmetric RF electrodes. In particular, it may become possible to employ an oscillating magnetic field that has a high magnetic field gradient at a minimum position of the amplitude of the oscillating magnetic field and to overlap this position with the RF null.

The present disclosure may allow to manipulate the oscillating magnetic field pattern e.g. without directly changing the structure of the manipulation electrode and of the RF electrodes.

The atom trap apparatus may comprise a plurality of atom traps. The atom trap apparatus may be configured to shuttle atoms between each of the atom traps. Such a configuration is sometimes referred to as "Quantum CCD". Connecting parts between two atom traps tend to have symmetric electrodes. Having an atom trap with asymmetric RF electrodes may require an intermediate zone that connects symmetric electrodes and asymmetric RF electrodes in order to avoid drastic changes of the RF field. With the atom trap comprising symmetric RF electrodes, it may be provided that no intermediate zone is required. If the atom trap comprises RF electrodes that are less asymmetric, it may be provided that the intermediate zone can be made smaller. Having symmetric RF electrodes or at least less asymmetric RF electrodes may thus allow to make the atom trap smaller, thereby improving scalability of the atom trap apparatus.

The manipulation electrode may comprise at least one pocket-like recess in a surface of the manipulation electrode that e.g. is not parallel to a plane of the atom trap that has a direct line of sight to an atom trapped in the atom trap. E.g., the at least one pocket-like recess may be in a surface that is orthogonal to a plane of the atom trap that has a direct line of sight to an atom trapped in the atom trap. The pocket-like recess may be configured to modify the oscillating magnetic field as compared to a state where the pocket-like recess is not present in the manipulation electrode.

E.g., the pocket-like recess may allow to reduce the amplitude of the oscillating magnetic field, e.g. by a factor of ten or more, at a position where a gradient of the oscillating magnetic field is maximal, and while keeping the gradient unchanged, e.g. within a tolerance of 20 % or less, or 10 % or less, or 5 % or less, or 1 % or less, e.g. at the RF null.

Having the at least one slit-like recess and the at least one pocket-like recess may allow to achieve an even higher degree of freedom and/or a higher variability in modifying the oscillating magnetic field.

The atom trap apparatus may comprise at least one layer. The structured electrode and the manipulation electrode may be located in the same layer. E.g., the atom trap may be a 2D surface trap. The atom trap apparatus may comprise a microwave line connected to the manipulation electrode. The structured electrode and the microwave line may be located in the same layer. E.g., the atom trap may have a multilayer architecture, e.g. in other words: The atom trap may have different layers/substrates/dies which are located above each other.

The atom trap apparatus may comprise a microwave area, e.g. in a top view/a cross-sectional top view. The microwave area may be comprised in the same layer where the structured electrode and the manipulation electrode/the microwave line are located. The manipulation electrode/the microwave line may be located inside the microwave area. The structured electrode may be located (e.g. partly or fully) outside of the microwave area. The at least one slit-like recess/all slit-like recesses of the at least one slit-like recess may be located (e.g. partly or fully) outside of the microwave area.

At least one/some/all of the slit-like recesses may also be connected to the microwave area/may extend into the microwave area. It may also be provided that at least one/some/all of the slit-like recesses are not connected to the microwave area/do not extend into the microwave area. Features of the "microwave area" are also indicated further below.

The microwave line may be a signal line providing a microwave signal to the manipulation electrode, e.g. for providing the oscillating magnetic field.

The structured electrode, the manipulation electrode, the set of RF electrodes, and the set of DC electrodes may all be located in the same layer, e.g. in case of a 2D surface trap. E.g. in case of a 3D trap, it may be provided that some/all DC electrodes and/or some/all RF electrodes are located in a different layer as compared to the manipulation electrode and the structured electrode.

The structured electrode does not need to be in the same layer as compared to the manipulation electrode. However, the distance between the structured electrode and the manipulation electrode/the microwave line connected to the manipulation electrode may generally influence the coupling between the structured electrode and the manipulation electrode. The coupling may be generally stronger for smaller distances. Hence, the structured electrode may be close to the manipulation electrode/the microwave line. The structured electrode may be located below the manipulation electrode. The structured electrode may surround the microwave line/a portion thereof, e.g. in a top view/a cross-sectional top view.

Electrodes of the atom trap apparatus may also be multi-layer electrodes/may extend across multiple layers of the atom trap apparatus.

Two electrodes being in same layer may refer to that the two electrodes have surfaces that are located in the same plane. E.g., the structured electrode and the manipulation electrode may each have a surface that is located in the same plane. The microwave line and the structured electrode being in the same layer may refer to that a surface of the microwave line and a surface of the structured electrode are located in the same plane.

The atom trap apparatus may comprise a first layer and a second layer. The manipulation electrode may be located in the first layer, and e.g. may extend into the second layer. The structured electrode may be located in the second layer. The atom trap apparatus may comprise a microwave line connected to the manipulation electrode. The second layer may comprise a microwave area. The microwave line may be located (e.g. fully) inside the microwave area. The structured electrode may be located (e.g. partly or fully) outside of the microwave area. At least one/some/all of the slit-like recesses may be located (e.g. partly or fully) outside of the microwave area. The atom trap apparatus may comprise further layers in addition to the first/second layer.

The microwave area may be an area where, apart from the conductive material of the manipulation electrode and/or the microwave line, no other conductive material is present. The microwave area may comprise all points/only points that can be connected to the microwave line and/or the manipulation electrode by a straight line that does not pass through any conductive material (e.g. apart from the conductive material of the microwave line and/or of the manipulation electrode). It may be provided that the microwave area does not comprise points that cannot be connected to the microwave line and/or the manipulation electrode by a straight line that does not pass through any conductive material (e.g. apart from the conductive material of the microwave line and/or of the manipulation electrode). The microwave area may comprise all points that have distance to the manipulation electrode/the microwave line of 10 µm or less, or 20 µm or less, or 50 µm or less, or 100 µm or less, or 200 µm or less, or 500 µm, e.g. in a top view/a cross-sectional top view.

The structured electrode may be formed around the microwave line. The atom trap apparatus may also comprise two structured electrodes, e.g. on either side of the microwave line, e.g. if the microwave line extends from one end of the second layer to the other end. The second layer may be different from the first layer. Electrodes of the set of DC electrodes and/or electrodes of the set of RF electrodes may e.g. be located in the first layer, or also in other layers, e.g. in the second layer. The first layer e.g. may be a top layer of the atom trap apparatus. The second layer e.g. may be a lower layer as compared to the first layer. The RF/DC trapping potential may be located above the top layer of the atom trap apparatus, e.g. the first layer.

Having the structured electrode, e.g. a structured ground electrode, in a lower layer may be beneficial in terms of scalability. E.g., in such a case, it may be provided that the structured electrode does not consume space in the top layer, which therefore may have more space for other components, such as the RF/DC electrodes. Also in the lower layer, the at least one structured electrode may be able to influence the oscillating magnetic field and to thereby improve the overlap/alignment between the oscillating magnetic field and the trapping potential.

The atom trap apparatus may comprise a connection layer located between the first layer and the second layer. The connection layer may comprise one or more vias electrically connecting the microwave line and the manipulation electrode.

The first layer e.g. may also be a lower layer as compared to the second layer (which e.g. may be a top layer). The RF/DC trapping potential may be located above the top layer of the atom trap apparatus, e.g. the second layer

The atom trap apparatus may comprise e.g. a plurality of second layers and e.g. a plurality of structured electrodes located in the second layers. The atom trap apparatus may e.g. also comprise a microwave line, which may be located in some of the second layers/each of the second layers.

Features disclosed with respect to one second layer may also apply to one or more/each of a plurality of second layers, unless specified otherwise and unless otherwise contradictory.

Having a plurality of second layers/structured electrodes located therein may provide additional degrees of freedom and generally more variability in modifying the oscillating magnetic field, and may also improve the scalability.

Each/some of the second layers may be a lower layer located below the first layer. The second layers of the plurality of second layers e.g. may be located above each other. Some/each of the second layers may be an upper layer located above the first layer.

A distance between the first layer, e.g., the top layer, and the second layer, e.g. the lower layer, may be e.g. between 1 µm and 50 µm, or between 2 µm and 10 µm.

It may be provided that a smallest distance between the at least one slit-like recess and a surface of the atom trap apparatus having a direct line of sight to an atom trapped in the atom trap is below 100 µm, or below 50 µm, or below 20 µm, or below 10 µm, or below 1 µm.

The at least one slit-like recess may be formed on one side of the microwave line and/or of the manipulation electrode, e.g. in a top-view/a cross-sectional top view. The at least one slit-like recess may also be formed on (at least) two sides of the microwave line/the manipulation electrode (e.g. one slit-like recess of the at least one slit-like recess may be formed on one side and another one may be formed on another side).

A plurality of slit-like recesses may be formed on (at least) one side of the microwave line. A plurality of slit-like recesses may be formed on (at least) two sides of the microwave line.

Also on (at least) two sides of the microwave line, a respective plurality of slit-like recesses may be formed.

The at least one slit-like recess may also be formed on three sides of the microwave line/the manipulation electrode, e.g. if the microwave line/the manipulation electrode is not a straight line but comprises turns. The at least one slit-like recess may also be formed on four or more sides of the microwave line/the manipulation electrode.

A plurality of slit-like recesses may be formed on three/four/or more sides of the microwave line/the manipulation electrode.

Also on three/four/or more sides of the microwave line/the manipulation electrode, a respective plurality of slit-like recesses may be formed.

The atom trap apparatus may comprise a plurality of atom traps. Each atom trap may have a respective set of RF electrodes, a respective set of DC electrodes, and a respective manipulation electrode. The manipulation electrodes of the respective atom traps may be electrically connected to each other. The manipulation electrodes of the respective atom traps may also be electrically independent from each other, i.e. not connected to each other.

The atom trap apparatus may comprise a single ground electrode, which e.g. may provide the electrical ground for all electrodes and for all atom traps of the atom trap apparatus. The atom trap apparatus may also comprise a plurality of ground electrodes, each of which may be configured to define an/the electrical ground.

The atom trap apparatus may comprise a connection layer, which may comprise vias that electrically connect the respective manipulation electrodes with each other, e.g. by a microwave line. The connection layer may comprise vias that electrically connect the RF electrodes and/or the DC electrodes and/or the ground electrodes, e.g. the vias may be respective feedlines.

The at least one slit-like recess may comprise a first slit-like recess formed next to a first manipulation electrode and a second slit-like recess formed next to a second manipulation electrode. The first slit-like recess may have a different structure as compared to the second slit-like recess.

The first manipulation electrode may have one or more slit-like recesses formed next to the first manipulation electrode. The second manipulation electrode may have one or more slit-like recesses formed next to the second manipulation electrode. E.g., the first manipulation electrode may have multiple first slit-like recesses, and the second manipulation electrode may have a single second slit-like recess or no second slit-like recess, and vice versa.

The at least one slit-like recess may comprise a first plurality of slit-like recesses formed next to a first manipulation electrode and a second plurality of slit-like recesses formed next to a second manipulation electrode. The first plurality of slit-like recesses may have a different structure as compared to the second plurality of slit-like recesses.

The at least one structured electrode may be a single structured electrode (e.g., a structured ground electrode) comprising the first slit-like recess and the second slit-like recess. The at least one structured electrode may be a plurality of structured electrodes (e.g., a plurality of structured DC/RF electrodes and/or a structured DC/RF electrode and/or a structured ground electrode), the plurality of structured electrodes comprising the first slit-like recess and the second slit-like recess.

The present disclosure may allow to individually adjust the oscillating magnetic field for each manipulation electrode/manipulation zone/oscillating magnetic field. E.g., the respective oscillating magnetic fields may be fine-tuned to match each other and/or depending on individual applications/requirements. This may facilitate realizing atom trap apparatuses having several manipulation electrodes, e.g. more than 1, or more than 2, or more than 5, or more than 10, or more than 50, or more than 100. The present disclosure may significantly enhance the scalability of atom traps. The first/second/n-th slit-like recess/plurality of slit-like recesses e.g. may be formed below the first/second/n-th manipulation electrode, e.g. in a multilayer architecture of the atom trap apparatus which e.g. may comprise a plurality of layers.

The at least one slit-like recess may allow to individually adjust the oscillating magnetic field for each manipulation electrode/manipulation zone/location where the oscillating magnetic field is present, e.g. without otherwise changing the electrode geometry (e.g., the geometry of the RF/DC electrodes). E.g., a similar/same RF electrode geometry may be used for different atom traps/trapping zones, such that intermediate zones may be not necessary (which may otherwise be necessary if the oscillating magnetic field would be individually adjusted without slit-like recesses).

According to a second aspect of the present disclosure, a method of producing an atom trap apparatus is provided. The atom trap apparatus comprises an atom trap. The atom trap comprises an RF trapping potential and a DC trapping potential. The method comprises providing a set of RF electrodes, a set of DC electrodes, a manipulation electrode and a ground electrode. The set of RF electrodes is configured to provide the RF trapping potential. The set of DC electrodes is configured to provide the DC trapping potential. The manipulation electrode is configured to provide an oscillating magnetic field. The oscillating magnetic field is configured to perform a gate operation on an atom trapped in the atom trap. The ground electrode is configured to define an electrical ground. The method comprises providing at least one structured electrode comprising at least one slit-like recess. The at least one structured electrode comprises a structured ground electrode and/or a structured DC electrode and/or at a structured RF electrode.

The method according to the second aspect may be a method of producing an atom trap apparatus according to the first aspect. Features disclosed with respect to the first aspect may thus also apply to the second aspect, and vice versa.

Providing the set of RF electrodes, the set of DC electrodes, the manipulation electrode and the ground electrode may comprise providing the at least one structured electrode, e.g. when the structured electrode is comprised in the set of RF electrodes, the set of DC electrodes, the manipulation electrode and the ground electrode.

Providing the at least one structured electrode may also be a separate action from the action of providing the set of RF electrodes, the set of DC electrodes, the manipulation electrode and the ground electrode, e.g. when the structured electrode is not comprised in the set of RF electrodes, the set of DC electrodes, the manipulation electrode and the ground electrode.

The at least one structured electrode may comprise a plurality of slit-like recesses.

Providing the at least one structured electrode may comprise providing at least one/a plurality of slit-like recesses to the at least one structured electrode.

Providing the at least one structured electrode may comprise providing the at least one slit-like recess to the structured electrode, e.g. such that the oscillating magnetic field is modified as compared to a state where the at least one slit-like recess is not present in the structured electrode.

According to a third aspect of the present disclosure, a method of performing a quantum operation on an atom trapped in the atom trap of the atom trap apparatus according to the first aspect is provided. Features disclosed with respect to the first/second aspect may also apply to the third aspect, and vice versa.

In the present disclosure, the term "DC" refers to "direct current/voltage", unless otherwise specified or unless contradictory. In the present disclosure, the term "RF" refers to "radio frequency", unless otherwise specified or unless contradictory.

All technical implementation details, features and advantages described with respect to the first aspect of the present disclosure are self-evidently mutatis mutandis applicable for the second aspect and the third aspect of the present disclosure and vice versa.

### BRIEF DESCRIPTION OF THE DRAWINGS

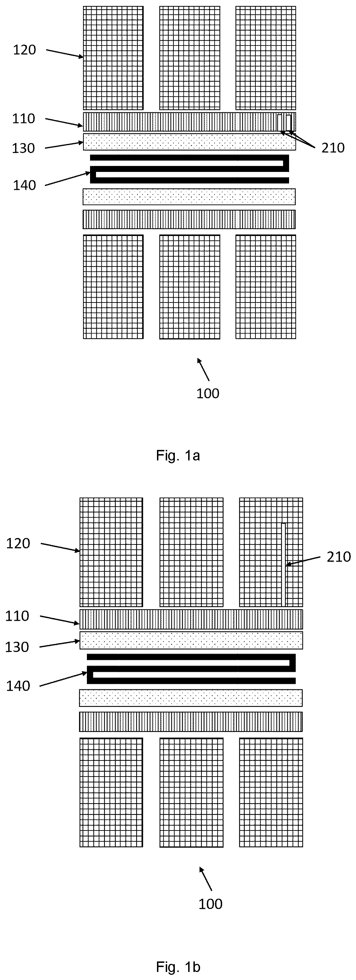

Reference will now be made to exemplary embodiments of the disclosure, examples of which are illustrated in the accompanying drawings. Wherever possible, the same reference numbers will be used throughout the drawings to refer to the same or like parts. Moreover, features explained in context of a specific embodiment, for example that one of Fig. 1a, also apply to any one of the other embodiments, when appropriate, unless differently described.
- Figs. 1a-c: are schematic top views of an atom trap apparatus according to embodiments of the present disclosure.
- Figs. 2a-b: illustrate methods of producing an atom trap apparatus according to embodiments of the present disclosure.
- Figs. 3a-e: show exemplary configurations of the manipulation electrode and related field patterns of the oscillating magnetic field.
- Figs. 4a-d: are schematic explosion views of atom trap apparatuses according to embodiments of the present disclosure.
- Fig. 5: shows various examples of pluralities of slit-like recesses according to embodiments of the present disclosure.
- Fig. 6: shows an example of an atom trap apparatus that comprises a first manipulation electrode and a second manipulation electrode electrically connected with each other, with a first plurality of slit-like recesses next to the first manipulation electrode and a second plurality of slit-like recesses next to the second manipulation electrode.
- Fig. 7: illustrates a method of performing a quantum operation on an atom trapped in the atom trap of the atom trap apparatus according to embodiments of the present disclosure.

### DESCRIPTION OF EMBODIMENTS

In the figures, areas with the same hatching may generally be understood as indicating same or similar components.

Figs. 1a-c are schematic top view of an atom trap apparatus according to embodiments of the present disclosure.

Fig. 1a shows an atom trap apparatus 100 comprising a set of RF electrodes 130, a set of DC electrodes 120, a manipulation electrode 140 (depicted as a meander structure) and a ground electrode 110. The connection between the two ground electrodes 110 (dotted area) is omitted in the drawing but present in reality. The ground electrode 110 is structured and comprises a plurality of slit-like recesses 210. The ground electrode 110 may also comprise a single-slit like recess 210, or more slit-like recesses 210 than shown in Fig. 1a.

The atom trap apparatus 100 shown in Fig. 1b is generally similar to the one shown in Fig. 1a. In Fig. 1b, one DC electrode 120 of the set of DC electrodes is structured and comprises the slit-like recess 210.

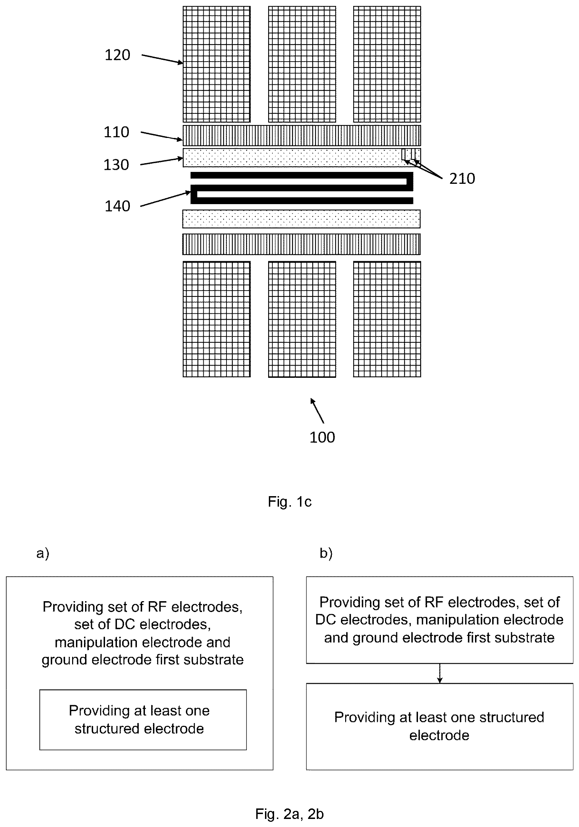

In Fig. 1c, one RF electrode 130 of the set of RF electrodes is structured and comprises a plurality of slit-like recesses 210.

Figs. 2a-b illustrate methods of producing an atom trap apparatus according to embodiments of the present disclosure.

In Fig. 2a, the method comprises providing a set of RF electrodes, a set of DC electrodes, a manipulation electrode and a ground electrode. As part of this action, the at least one structured electrode is provided, which comprises at least one slit-like recess. The structured electrode may be comprised in the set of RF electrodes, the set of DC electrodes, the manipulation electrode and the ground electrode.

In Fig. 2b, the method comprises providing a set of RF electrodes, a set of DC electrodes, a manipulation electrode and a ground electrode. As a separate action, the at least one structured electrode is provided, which comprises at least one slit-like recess. It may be provided that the structured electrode is not comprised in the set of RF electrodes, the set of DC electrodes, the manipulation electrode and the ground electrode.

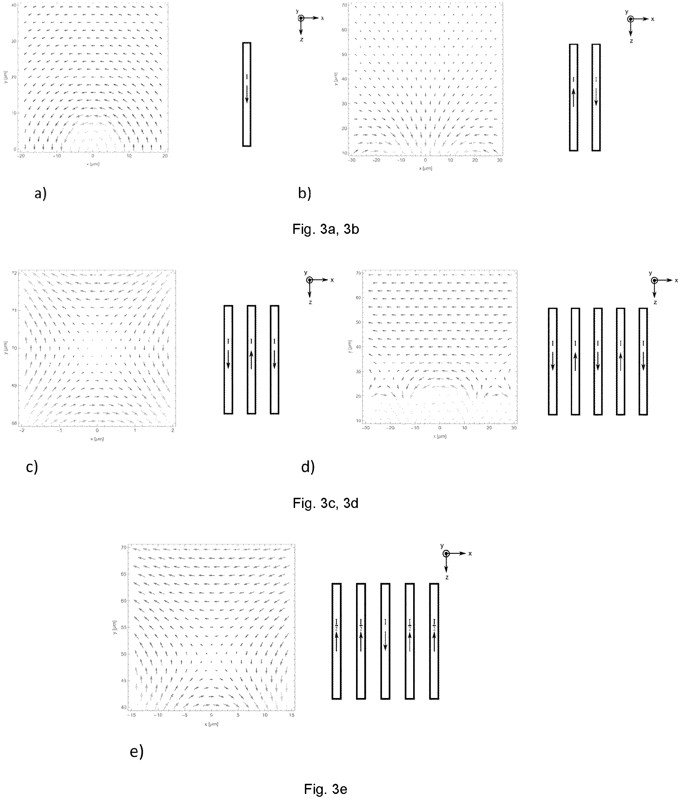

Figs. 3a-3e show exemplary configurations of the manipulation electrode and related field patterns of the oscillating magnetic field.

Fig. 3a illustrates a manipulation electrode being a single waveguide-like electrode. This electrode provides an oscillating magnetic field with a simple field pattern. The field is maximum above the manipulation electrode, where the field lines are parallel with a surface of the manipulation electrode/of the atom trap that has a direct line of sight to an atom trapped in the atom trap (not shown).

Fig. 3b illustrates a manipulation electrode having a two-wire-like configuration, with currents flowing in opposite directions. The field is maximum above a middle point between the two electrode surfaces, where the field lines enter into a surface of the atom trap apparatus (not shown).

Fig. 3c illustrates a manipulation electrode that has a three-wire shape with currents flowing in alternating directions. The oscillating magnetic field has a quadrupole-shape, with a minimum above the central electrode surface. This electrode may also have a meander-shape, and the individual surfaces e.g. may be connected in a lower layer of the atom trap apparatus.

Fig. 3d illustrates a manipulation electrode that has a five-wire shape with currents flowing in alternating directions. Fig. 3e illustrates a manipulation electrode that has a five-wire shape with currents flowing in alternating directions. The central track/surface carries a current amount I in one direction, while the remaining four surfaces carry half of this current amount in the opposite direction. As can be seen when comparing Figs. 3d and 3e, different oscillating magnetic field patterns can be provided with the same/a similar manipulation electrode geometry, depending on which currents are applied to individual parts of the manipulation electrode.

Individual surfaces/tracks of the manipulation electrode that are shown separated in Figs. 3a-3e e.g. may be connected with each other, e.g. in a lower layer of the atom trap apparatus. Connecting the individual surfaces/tracks may be advantageous as this may introduce fixed phase and amplitude relations between these tracks, and thereby may remove/reduce need for stabilization.

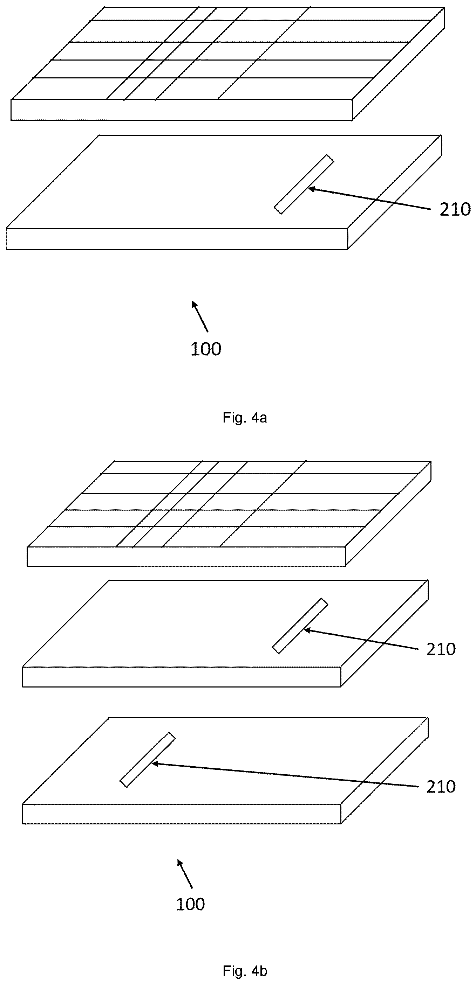

Figs. 4a-4d are schematic explosion views of atom trap apparatuses according to embodiments of the present disclosure.

In the atom trap apparatus 100 of Fig. 4a, the set of RF electrodes, the set of DC electrodes and the manipulation electrode are located in a first layer, i.e. the top layer. Details of the top layer are omitted for simplicity. In a second layer, a lower layer, a structured electrode is located that comprises at least one slit-like recess 210.

The atom trap apparatus 100 of Fig. 4b comprises two second layers. In each of the second layers, a structured electrode is located that comprises at least one slit-like recess 210. The structured electrodes of the second layers may be the same structured electrode or may be different structured electrodes.

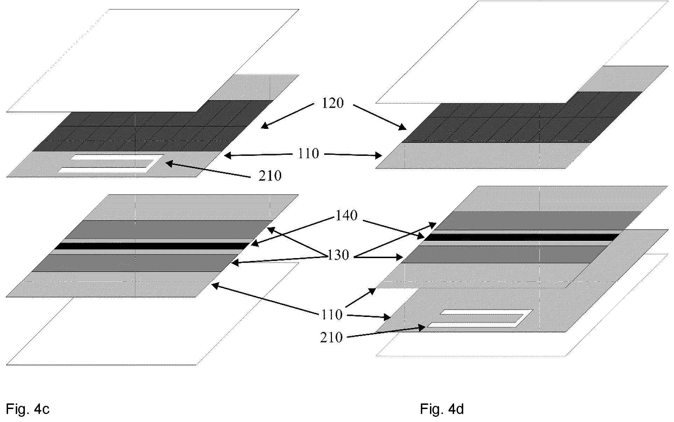

Figs. 4c and 4d show examples of 3D traps, where DC electrodes 120 and RF electrodes 130 are located on two different substrates facing towards each other, and where the atom trap is located between the two substrates.

In the 3D trap of Fig. 4c, ground electrode 110 and DC electrodes 120 are located in an upper substrate. The ground electrode 110 is structured and comprises the at least one slit-like recess 210. A lower substrate comprises a ground electrode 110, RF electrodes 130 and the manipulation electrode 140.

In the 3D trap of Fig. 4d, ground electrode 110 and DC electrodes 120 are located in an upper substrate. A lower substrate comprises a ground electrode 110, RF electrodes 130 and the manipulation electrode 140. The lower substrate may be considered as a first layer/as being located in a first layer. The atom trap apparatus comprises a second layer located below the first layer. The ground electrode 110 located in the lower layer is structured and comprises the at least one slit-like recess 210.

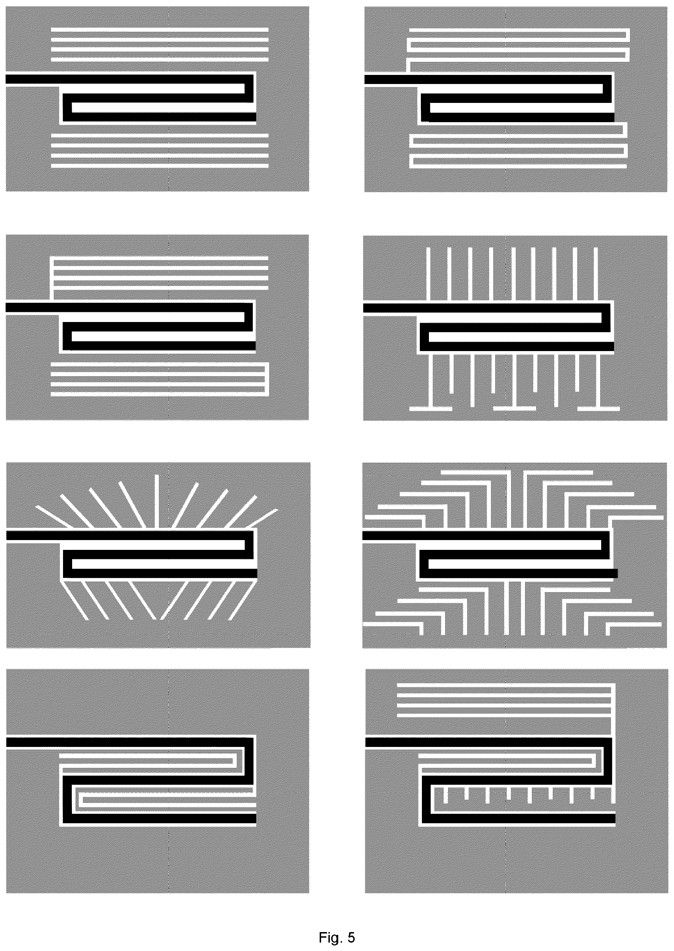

Fig. 5 shows various examples of pluralities of slit-like recesses according to embodiments of the present disclosure. The manipulation electrode is indicated in black and the structured ground electrode is indicated in grey. Fig. 5 shows structured ground electrodes in a second/lower layer that is located below a first/top layer, where the upper surface of the manipulation electrode is located. The manipulation electrode may be a multi-layer electrode/may be located in the first/top layer and in the second/lower layer. The atom trap apparatus may comprise further layers in addition to the first/second layer.

As can be seen, the structured electrode may comprise a plurality of slit-like recesses, which may be connected with each other and/or which may be separate from each other. It may also be provided that some of the slit-like recesses are connected with each other while some other are not. Slit-like recesses of the plurality of slit-like recesses may form various geometrical figures, which are not particularly limited. The dimensions, quantity and location of the at least one slit-like recess may be determined e.g. based on numerical simulations and e.g. considering the properties of the set of **RF** electrodes/the **RF** trapping potential and of the manipulation electrode/the oscillating magnetic field.

While Fig. 5 illustrates configurations with a structured ground electrode and lower/upper layers, it is readily apparent that the shown configurations of the plurality of slit-like recesses are exemplarily only, and can also be applied to other types of structured electrodes (e.g., DC/RF electrodes) and to atom trap apparatuses that do not have a multilayer architecture/that have a different multilayer architecture. In particular, the slit-like recesses e.g. may also be present in a top layer of the atom trap apparatus. The slit-like recesses may have a direct line of sight to an atom trapped in the atom trap. It may be provided that the slit-like recesses do not have a direct line of sight to an atom trapped in the atom trap.

In Fig. 5, the manipulation electrode is located fully inside a microwave area, and slit-like recesses may be understood as being located (partly or fully) outside of the microwave area. Some slit-like recesses indicated in Fig. 5 comprise points that can be connected to the manipulation electrode by a straight line that does not pass through any conductive material (apart from the conductive material of the manipulation electrode). Other of the slit-like recesses indicated in Fig. 5 comprise points that cannot be connected to the manipulation electrode by such a straight line

In the first row of Fig. 5, left image, each slit-like recess comprises points whose shortest line of connection to the manipulation electrode passes through a conductive material that is not comprised in the manipulation electrode. In addition, each point of the slit-like recesses cannot be connected to the manipulation electrode by a straight line that does not pass through any conductive material (apart from the conductive material of the manipulation electrode). In the right image of the first column, most of the slit like-recesses comprise points that cannot be connected to the manipulation electrode by a straight line that does not pass through any conductive material (apart from the conductive material of the manipulation electrode).

In the second row of Fig. 5, right image, some slit-like recesses comprise points whose shortest line of connection to the manipulation electrode does not pass through a conductive material that is not comprised in the manipulation electrode.

In the third row of Fig. 5, left image, slit-like recesses are shown that comprise points whose shortest line of connection to the manipulation electrode passes through a conductive material that is not comprised in the manipulation electrode while these points can be connected to the manipulation electrode by a straight line that does not pass through any conductive material (apart from the conductive material of the manipulation electrode).

In the fourth row, configurations are shown where slit-like recesses are formed on more than two sides of the manipulation electrode.

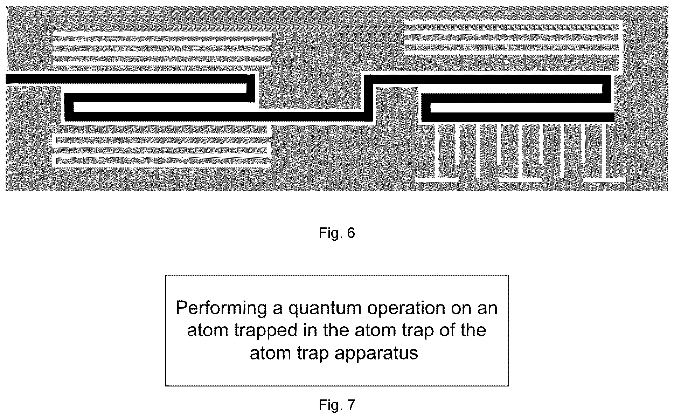

Fig. 6 shows an example of an atom trap apparatus that comprises a first manipulation electrode and a second manipulation electrode (indicated in black) electrically connected with each other, with a first plurality of slit-like recesses next to the first manipulation electrode and a second plurality of slit-like recesses next to the second manipulation electrode.

Fig. 7 illustrates a method of performing a quantum operation on an atom trapped in the atom trap of the atom trap apparatus according to embodiments of the present disclosure.

The different structure of the first/second plurality of slit-like recesses next to the first/second manipulation electrode allows to individually adjust the respective oscillating magnetic fields, e.g. for perfect overlap with the respective RF trapping potentials.

Although some aspects have been described in the context of an apparatus, it is clear that these aspects also represent a description of the corresponding method, where a block or a component corresponds to a method action or a feature of a method action. Analogously, aspects described in the context of a method also represent a description of a corresponding component or item or feature of a corresponding apparatus.

### LIST OF REFERENCE SIGNS

- 100: Atom trap apparatus
- 110: Ground electrode
- 120: DC electrode
- 130: RF electrode
- 140: Manipulation electrode
- 210: Slit-like recess

## Claims

1. An atom trap apparatus (100), comprising:
an atom trap comprising an RF trapping potential and a DC trapping potential, and
a set of RF electrodes (130), a set of DC electrodes (120), a manipulation electrode (140) and a ground electrode (110), the set of RF electrodes (130) being configured to provide the RF trapping potential, the set of DC electrodes (120) being configured to provide the DC trapping potential, the manipulation electrode (140) being configured to provide an oscillating magnetic field, the oscillating magnetic field being configured to perform a gate operation on an atom trapped in the atom trap, the ground electrode (110) being configured to define an electrical ground,
wherein the atom trap apparatus comprises at least one structured electrode comprising at least one slit-like recess (210),
wherein the at least one structured electrode comprises a structured ground electrode and/or a structured DC electrode and/or a structured RF electrode.

2. The atom trap apparatus (100) according to claim 1,
wherein the at least one slit-like recess (210) is configured to modify the oscillating magnetic field as compared to a state where the at least one slit-like recess (210) is not present in the structured electrode,
wherein optionally, the at least one slit-like recess (210) is configured to shift the oscillating magnetic field,
wherein further optionally, an extremum position of the oscillating magnetic field is shifted towards a null position of the RF trapping potential.

3. The atom trap apparatus (100) according to claim 2,
wherein the at least one slit-like recess (210) is configured to modify the amplitude of the oscillating magnetic field at a null position of the RF trapping potential,
wherein optionally, the at least one slit-like recess (210) is configured to keep a gradient of the oscillating magnetic field unchanged at the null position of the RF trapping potential.

4. The atom trap apparatus (100) according to any one of claims 1 to 3,
wherein the at least one structured electrode comprises a plurality of slit-like recesses (210),
wherein slit-like recesses (210) of the plurality of slit-like recesses (210) are connected to each other, and/or
wherein slit-like recesses (210) of the plurality of slit-like recesses (210) form at least one of the following structures:
a fork-like structure,
a plurality of parallel slits,
a fan-like structure,
a spiral,
a circle,
a serpentine-like structure,
a meander structure.

5. The atom trap apparatus (100) according to any one of claims 1 to 4,
wherein the manipulation electrode (140) is one of the following:
- a single-wire like electrode,
- a two-wire like electrode,
- a single waveguide-like electrode,
- a coplanar waveguide-like electrode,
- a meander-shaped electrode,
- a trident-like electrode,
- a U-shaped electrode,
- a spiral-like electrode.

6. The atom trap apparatus (100) according to any one of claims 1 to 5,
wherein, in a top view, the set of RF electrodes (130) has two axial symmetry axes,
wherein the two axial symmetry axes are orthogonal.

7. The atom trap apparatus (100) according to any one of claims 1 to 6,
wherein the manipulation electrode (140) comprises at least one pocket-like recess in a surface of the manipulation electrode (140) that is not parallel to a plane of the atom trap that has a direct line of sight to an atom trapped in the atom trap,
wherein the pocket-like recess is configured to modify the oscillating magnetic field as compared to a state where the pocket-like recess is not present in the manipulation electrode.

8. The atom trap apparatus (100) according to any one of claims 1 to 7,
wherein the atom trap apparatus (100) comprises at least one layer,
wherein the structured electrode and the manipulation electrode (140) are located in the same layer, and/or
wherein the atom trap apparatus (100) comprises a microwave line connected to the manipulation electrode (140) and wherein the structured electrode and the microwave line are located in the same layer.

9. The atom trap apparatus (100) according to any one of claims 1 to 7,
wherein the atom trap apparatus (100) comprises a first layer and a second layer,
wherein the manipulation electrode (140) is located in the first layer,
wherein the structured electrode is located in the second layer,
wherein optionally, the atom trap apparatus (100) comprises a microwave line connected to the manipulation electrode (140) and the second layer comprises a microwave area, the microwave line being located inside the microwave area, the structured electrode being located outside of the microwave area.

10. The atom trap apparatus according to claim 8 or claim 9,
wherein the at least one slit-like recess is formed on one side of the microwave line, or wherein the at least one slit-like recess is formed on two sides of the microwave line.

11. The atom trap apparatus (100) according to any one of claims 1 to 10,
wherein the atom trap apparatus (100) comprises a plurality of atom traps, each atom trap having a respective set of RF electrodes (130), a respective set of DC electrodes (120), and a respective manipulation electrode (140),
wherein optionally, the manipulation electrodes are electrically connected to each other.

12. The atom trap apparatus according to claim 11,
wherein the at least one slit-like recess (210) comprises a first slit-like recess formed next to a first manipulation electrode and a second slit-like recess formed next to a second manipulation electrode,
wherein the first slit-like recess has a different structure as compared to the second slit-like recess.

13. Method of producing an atom trap apparatus (100), the atom trap apparatus (100) comprising an atom trap, the atom trap comprising an RF trapping potential and a DC trapping potential, the method comprising:
providing a set of RF electrodes (130), a set of DC electrodes (120), a manipulation electrode (140) and a ground electrode (110), the set of RF electrodes (130) being configured to provide the RF trapping potential, the set of DC electrodes (120) being configured to provide the DC trapping potential, the manipulation electrode (140) being configured to provide an oscillating magnetic field, the oscillating magnetic field being configured to perform a gate operation on an atom trapped in the atom trap, the ground electrode (110) being configured to define an electrical ground, and
providing at least one structured electrode comprising at least one slit-like recess (210),
wherein the at least one structured electrode comprises a structured ground electrode and/or a structured DC electrode and/or at a structured RF electrode.

14. The method according to claim 13, wherein providing the at least one structured electrode comprises:
providing the at least one slit-like recess (210) to the structured electrode such that the oscillating magnetic field is modified as compared to a state where the at least one slit-like recess is not present in the structured electrode.

15. Method of performing a quantum operation on an atom trapped in the atom trap of the atom trap apparatus (100) according to any of claims 1 to 12.
